# EUROPÄISCHE PATENTSCHRIFT

(11) **EP 0 960 716 B1**
(45) Veröffentlichungstag und Bekanntmachung des Hinweises auf die Patenterteilung: **02.10.2002**
(21) Anmeldenummer: 99108145.6
(22) Anmeldetag: 26.04.1999
(51) Int. Cl.: B29C 47/68, B29C 47/08, B01D 35/12

(54) **Vorrichtung zur Grossflächenfiltration thermoplastischer Schmelzen für Extruder**
Apparatus filtering thermoplastic melts for extruder
Dispositif pour filtrer des matières thermoplastiques fondues pour une extrudeuse

(30) Priorität: 28.05.1998 DE 19823765
(43) Veröffentlichungstag der Anmeldung: 01.12.1999
(73) Patentinhaber: LINDAUER DORNIER GESELLSCHAFT M.B.H, 88129 Lindau (DE)
(72) Erfinder: Rutz, Andreas Dr., 88131 Lindau (DE); Müller, Friedrich, 42899 Remscheid (DE)

(56) Entgegenhaltungen:
- DE-A- 19 524 340
- US-A- 2 656 930
- US-A- 3 455 357
- US-A- 3 727 767
- US-A- 5 536 399

## Beschreibung

Die Erfindung betrifft eine Vorrichtung zur Großflächenfiltration thermoplastischer Schmelzen für Extruder mit einem Einfach- oder Doppelschmelzefilter nach dem Oberbegriff des Anspruches 1, wie diese beispielsweise bei der Folienherstellung eingesetzt werden.

Einfachschmelzefilter werden zum einen dort eingesetzt, wo eine kontinuierliche Produktion nicht stattfinden kann oder muss bzw. wo man eine Produktionsunterbrechung zum Wechseln der Filtereinsätze in Kauf nimmt.

Zum anderen werden Einfachschmelzefilter als zweite, feinfiltrierende Stufe hinter eine Doppelschmelzefilter-Einheit geschaltet. Dabei steht üblicherweise der Doppelschmelzefilter zwischen einem Aufschmelzextruder und einem Schmelzextruder bzw. einer Schmelzepumpe, und der Einfachschmelzefilter wird dem Schmelzextruder bzw. der Schmelzepumpe so nachgeschaltet, dass dieser Einfachschmelzefilter möglichst nahe an der Extrusionsdüse platziert ist. Hinter der Düse liegt dann zumeist mindestens eine Kühlwalze, die dann das Extrudat unter Folienbildung abkühlt und einer Reckanlage zur Weiterverarbeitung zuführt

Diese Schmelzefilter für die Großflächenfiltration bestehen in konventioneller Weise aus dem Filtergehäuse, den Filtereinsätzen und, falls es sich um Doppelfilter handelt, den zwischen zwei Filtern eingeordneten Schmelzeventilen. Die Filtereinsätze, die mit den eigentlichen Filterelementen bestückt sind, müssen für den Reinigungsprozess ausgebaut werden. Dabei bleibt das elektrisch-, flüssig- oder dampfbeheizte Filtergehäuse fest installiert. Für einen leckagefreien Extrusionsbetrieb ist es notwendig, dass die Filtereinsätze an ihren Ein- und Austrittsöffnungen mit relativ großen Kräften in die dafür vorgesehenen Zentrier- bzw. Dichtflächen gepresst werden. Zur Erzeugung der hohen Anpresskräfte werden groß dimensionierte Druckschrauben oder auch keilförmige Schnellverbindungen eingesetzt. Den Zentrier- bzw. Dichtflächen kommt daher eine besondere Bedeutung zu; sie müssen bei jedem Filterwechsel sorgfältig gereinigt werden. Während der Filtereinsatz in einem besonders dafür präparierten Raum demontiert und gereinigt wird, muss auch das fest installierte Filtergehäuse im Bereich der Schmelzeanschlüsse noch sorgfältig gereinigt werden.

Nachteil bei konventionellen Filtereinrichtungen für Extrusionsanlagen ist, dass der am Ein- und Austrittsstutzen vorhandene Arbeitsraum oft sehr eng ist. Daher bedarf es aufgrund der relativ hohen Wärmeabstrahlung eines besonderen handwerklichen Geschicks Reinigungsund Wartungsarbeiten durchzuführen.

An den schmelzeberührenden Flächen und den Dichtflächen zwischen Filter und Ventil dürfen bei Reinigungs- und Wartungsarbeiten keine mechanischen Beschädigungen auftreten. Schlecht gereinigte Schmelzekanäle können beim Wiederanfahren des Filters ein Verschmutzen des Extrudats bewirken, was zu Produktionsschäden führt, wie beispielsweise zum Folienreißen.

Um die Zugänglichkeit zu Reinigungszwecken zu erhöhen, geht die eine Ausführungsform des Standes der Technik bezüglich Doppelfilter den Weg, dass die beiden Schmelzeventile von den Schmelzefiltern räumlich getrennt angeordnet werden und mit diesen über Rohrleitungen in Verbindung stehen. Auch die beiden Filter untereinander und die beiden Ventile untereinander sind räumlich voneinander getrennt. Es besteht also die Möglichkeit bis zur Kontaminierung des ersten Filters die Schmelze durch das Eingangs-Dreiwegeventil über eine Rohrleitung zum ersten Filter zur Filtration zu leiten, danach über eine weitere Rohrleitung zum Ausgangs-Dreiwegeventil. Muss der erste Filter gereinigt werden, werden die beiden Dreiwegeventile nach einem bestimmten Verfahren synchronisiert umgeschaltet, und somit der zweite Filter in den Schmelzefluss einbezogen.

Die Schmelze fließt nun über das umgeschaltete Eingangs-Dreiwegeventil über eine Rohrleitung zum zweiten Filter, durch diesen hindurch und über eine weitere Rohrleitung zum Ausgangs-Dreiwegeventil.

Nachteil hierbei ist, dass trotz besserer Zugänglichkeit zu Reinigungszwecken, zum einen ein nicht unerheblich großer Platzbedarf von Nöten ist und zum anderen mindestens vier Rohrleitungen mit insgesamt mindestens acht Anschluss- bzw. Dichtstellen gereinigt werden müssen. Außerdem müssen die Filter verschiebbar in der Anlage angeordnet sein, um die Rohrleitungen ausbauen zu können und Rohrleitungsanschlüsse zur Reinigung zugänglich zu machen, was einen zusätzlichen Platzbedarf und höhere Konstruktions- und Herstellungskosten zur Folge hat. Durch die Verrohrung der beiden Ventile mit den beiden Filtern und die dabei unvermeidlich entstehenden Umlenkungen der Extrusionsschmelze bei ihrer Förderung entstehen zusätzliche Kosten im Hinblick auf den Energieverbrauch von Förderpumpe und Beheizung der Anlage.

Eine andere Ausführungsform des Standes der Technik zeigt eine kompaktere Bauweise mit zwei Filtern und mit nur einem dazwischen geschalteten Ventil mit Doppelküken, wobei die beiden Filter linear verschiebbar in der Anlage angeordnet sind. Diese Konstruktion beinhaltet zwar nicht den Nachteil der langen Rohrleitungen und der vielen Anschlussstücke, benötigt aber trotz Kompaktbauweise viel Platz in der Umgebung, da zu Reinigungszwecken der Anschlussstücke und der Filtereinsätze die Filterkammern mit Filtereinsätzen vom Doppelventil weg verschoben werden müssen. Bei der Reinigung selbst ist der Bediener thermischen Einwirkungen der Anlage stark ausgesetzt, da er zwischen weggeschobenem Filtergehäuse und restlicher Anlage steht. Neben hohen Konstruktions- und Fertigungskosten sind auch hier hohe laufende Kosten ein weiterer Nachteil, da hier sechs Schmelzeumlenkungen in der Leitungsführung vorgesehen sind.

Aus dem CH-Patent 487 730 ist des weiteren eine Vorrichtung zum Schmelzefiltern mit mehreren Filterkammem bekannt. Diese Vorrichtung verzichtet darauf, den Schmelzefluss im Einlass und Auslass der Filterkammern mittels eines Schmelzeventils absperren zu können. Statt dessen ist der Filterhalter mit wenigstens zwei unabhängig voneinander austauschbaren Filtern ausgestattet, wobei der Filterhalter schwenk- oder verschiebbar um die Mittenachse eines Körpers gelagert ist, der aus einem an einen Extruder anschließbaren Einlassteil und aus einem an eine Form anschließbaren Auslassteil besteht, wobei der Einlass- und der Auslassteil Einlass- und Auslasskanäle aufweist.
Neben dem Vorteil, dass diese Vorrichtung auf Schmelzeventile am Ein- und Auslass verzichtet, ist während sich das eine Filter in Arbeitsposition befindet, das andere Filter in der Filterwechselposition.
Wartungs- und Reinigungsarbeiten sind aufgrund des nur begrenzt vorhandenen Arbeitsraumes im Ein- und Auslassbereich der Vorrichtung und wegen der hohen Strahlungswärme aus der Umgebung des wirksamen Filters sehr erschwert. Sachgemäße Wartungs- und gründlich durchzuführende Reinigungsarbeiten sind an der bekannten Vorrichtung erst dann möglich, wenn der Schmelzefluss unterbrochen und der Filterhalter mit allen Filtern in die Wartungsposition geschoben oder geschwenkt ist.

Die US 5,536,399 zeigt eine Vorrichtung nach dem Oberbegriff des Anspruchs 1.

Aufgabe der vorliegenden Erfindung ist es, eine Vorrichtung zur Großflächenfiltration thermoplastischer Schmelzen so weiterzubilden, dass oben genannte Nachteile wie Unzugänglichkeit beim Filterwechsel und die damit verbundene lange Reinigungszeit, Sicherheitsrisiken für das Bedienpersonal, hohe Fehlerquote durch mechanische Beschädigungen der schmelzeberührenden Oberflächen und nicht entfernte Restpartikel verringert oder sogar völlig beseitigt werden.

Zur Lösung der gestellten Aufgabe ist die Erfindung durch die technische Lehre des Anspruchs 1 gekennzeichnet.

Wesentliches Merkmal ist dabei, dass zu Reinigungszwecken die Filtergehäuse zusammen mit den Filtereinsätzen um eine Achse schwenkbar in der Vorrichtung angeordnet sind. Durch das Herausschwenken um beispielsweise 90° werden die Einlass- und Auslass-Dichtflächen von Schmelzeventil und Schmelzefilter zugänglich gemacht, ohne dabei wesentlich Raum in der Umgebung der Vorrichtung zu benötigen, im Gegensatz zu Stand der Technik, bei dem die Filterelemente linear von den Ventilen wegbewegt werden. Beim linearen Wegfahren der Filterelemente muss so weit herausgefahren werden, bis ein Bediener zwischen Filterelement und Vorrichtung passt und dieser Bediener zusätzlich noch entsprechendes Werkzeug wie Reinigungsbürsten auf entsprechend langen Halterungen ohne Probleme bewegen kann.

Beim rotatorischen Herausschwenken um eine Achse entsteht dieses Platzproblem nicht, da sich die zu reinigenden Dichtflächen im wesentlichen im rechten Winkel zueinander befinden und somit ein bequemes, frei zugängliches Arbeiten ermöglicht wird.

Dieses frei zugängliche Arbeiten hat die Vorteile der schnelleren und gründlicheren Reinigungsmöglichkeit, und bringt zudem für den Bediener durch die günstigere Arbeitsposition und den vergrößerten Arbeitsraum mehr Sicherheit in Bezug auf Ermüdung, Verletzungen durch mechanisches Berühren scharfer Kanten oder thermische Einwirkungen und vermeidet Langzeitschäden durch schlechte Haltung während der Arbeit. Hiermit wird auch die Fehlerquote der Bediener bezüglich Restpartikel und/oder mechanische Beschädigung der schmelzeberührenden Teile verringert, da die Konzentrationsfähigkeit des Bedieners länger erhalten bleibt.

Durch geeignete Maßnahmen, wie Kompaktbauweise und die damit verbundenen kurzen Schmelzewege, wenige Schmelzeumlenkungen, schnell auswechselbare Filtermodule und Anschlussstücke durch Steck-, Schraub- und Spannverbindungen, werden bei Realisierung der vorliegenden Erfindung die Betriebskosten niedrig gehalten.

Die Kompaktbauweise, ohne lange Schmelzewege durch Verrohrung der Filter mit den Ventilen, hält die Fehlerquote in der Produktion niedrig, da nur wenige schmelzeberührende Oberflächen und Dichtflächen gereinigt werden müssen und somit weniger die Gefahr besteht, dass Fremdpartikel aus dem vorhergehenden Extrudat oder Partikel durch mechanische Beschädigung der Oberflächen der Anlage beim Reinigen in den neuen Produktionsprozess gelangen.

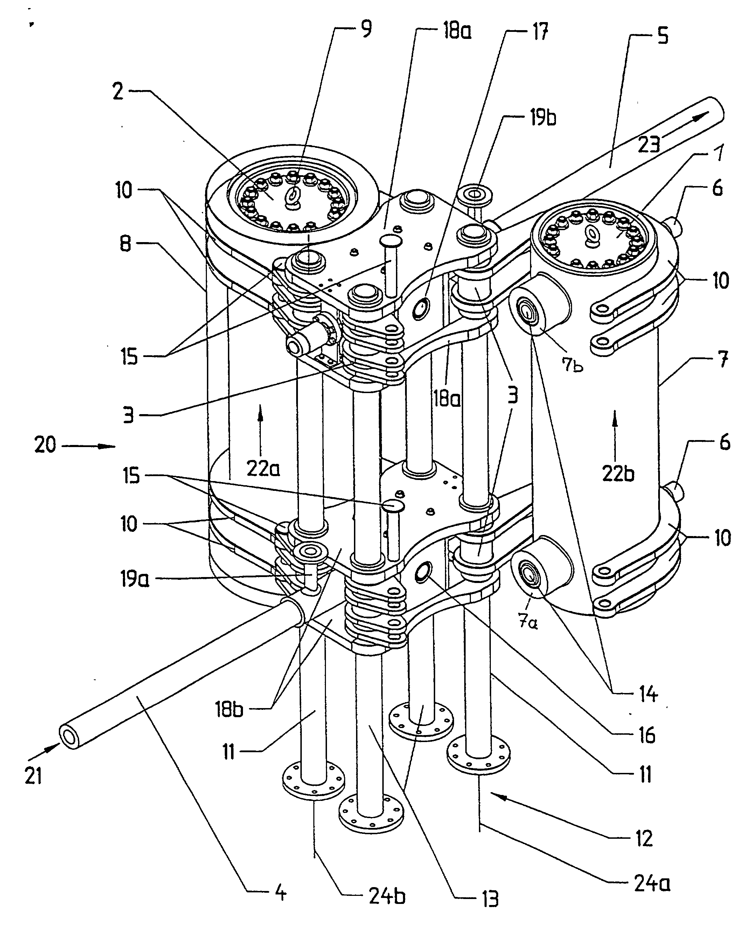

Die Figur zeigt eine Vorrichtung zur Großflächenfiltration gemäß der vorliegenden Erfindung.

Im Folgenden wird die Erfindung anhand von einer lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Die Figur zeigt die Vorrichtung zur Großflächenfiltration gemäß der vorliegenden Erfindung, wobei ein erster Filter 2 zusammen mit seinem jeweiligen Filtergehäuse 8 mit den Ventilen 16, 17 in Verbindung steht (Betriebszustand) und wobei ein zweiter Filter 1 zusammen mit seinem jeweiligen Filtergehäuse 7 um etwa 90° aus der Betriebsposition in die Wartungsposition herausgeschwenkt wurde (Reinigungszustand).

Die Schmelze fließt in Förderrichtung 21 durch die Eingangs-Schmelzeleitung 4 über das untere Schmelzeventil 16 und über einen Einlass 7a bzw. einen nicht sichtbaren Einlass 8a in die Filter 1 oder 2 ein, wird dort filtriert und fließt in Förderrichtung 22a oder 22b nach oben und tritt dann über einen entsprechenden Auslass 7b bzw. 8b und über das obere Schmelzeventil 17 durch die Austritts-Schmelzeleitung 5 in Förderrichtung 23 wieder aus der Vorrichtung 20 aus.

Die Schmelzeventile 16, 17 sind zwischen die Joche 18a, 18b der Vorrichtung 20 eingespannt, welche Joche 18a, 18b auch gleichzeitig als Halterung für die Säulen 11, 13 und für die nicht näher dargestellten Antriebe der Schmelzventile 16, 17 dienen.

Die Filter 1, 2 können nach dem Lösen der Spannschrauben 6 aus dem üblicherweise elektrisch-, flüssigkeits- oder dampfbeheizten Filtergehäuse 7, 8 mittels geeignetem Hebezeug an den Augenschrauben 9 herausgezogen werden. Das Filtergehäuse 7, 8 ist an den Spannbügeln 10 im Bereich der Spannschrauben 6 aufgehängt bzw. abgestützt. Die Spannbügel 10 sind in der Säule 11 des Säulengestells 12 drehbar in der Hülse 3 gelagert und werden in einer weiteren Säule 13 des Säulengestells 12 nach dem Zurückschwenken des Filtergehäuses 7, 8 mittels der Bolzen 15 befestigt.

Nach der Befestigung kommt die Dichtfläche des Zwischenstücks 14 im Einlass 7a bzw. Auslass 7b mit der Zentrierung des Schmelzeventils 16, 17 in Kontakt und wird mit den Spannschrauben 6 auf den zuvor ermittelten Wert der Flächenpressung angedrückt. Die Dichtfläche des Zwischenstücks 14 und die Zentrierung des Schmelzeventils sind so ausgebildet, dass eine Selbstzentrierung stattfindet. Außerdem erlauben die kalottenartigen, beidseitigen Ausbildungen der Dichtflächen des Zwischenstücks 14 bei unterschiedlichen Wärmedehnungen zwischen den unteren und oberen Anschlusspunkten zur Längenkorrektur eine geringfügige Schrägstellung. Nach dem Schwenken des Filtergehäuses 7, in die Reinigungsposition sind die Zentrierflächen der Ventile 16, 17 und des Zwischenstücks 14 frei zugänglich. Das Zwischenstück 14 kann leicht herausgenommen werden und in die Reinigungsanlage gegeben werden. Die Zentrierflächen der Ventile 16, 17 inklusive der Schmelzekanäle können dann durch die gute Zugänglichkeit ebenfalls leicht gereinigt und kontrolliert werden.

Zum erneuten Anfahren nach erfolgtem Filterwechsel bzw. Umschalten auf den neuen Filter, sind Stutzen für die Entlüftungsventile 19a, 19b an der Eingangs-Schmelzeleitung 4 und der Ausgangs-Schmelzeleitung 5 vorgesehen.

### ZEICHNUNGS-LEGENDE

- 01: Filter
- 02: Filter
- 03: Hülse
- 04: Schmelzeleitung, Eintritt
- 05: Schmelzeleitung, Austritt
- 06: Spannschraube
- 07: Filtergehäuse
- 07a: Einlass
- 07b: Auslass
- 08: Filtergehäuse
- 08: Einlass
- 08: Auslass
- 09: Augenschraube
- 10: Spannbügel
- 11: Säule
- 12: Säulengestell
- 13: Säule
- 14: Zwischenstück
- 15: Bolzen
- 16: unteres Schmelzeventil
- 17: oberes Schmelzeventil
- 18a: obere Joche
- 18b: untere Joche
- 19a: Stutzen für Entlüftungsventil
- 19b: Stutezn für Entlüftungsventil
- 20: Vorrichtung
- 21: Förderrichtung
- 22a: Förderrichtung
- 22b: Förderrrichtung
- 23: Förderrichtung
- 24a: Schwenkachse
- 24b: Schwenkachse

## Patentansprüche

1. Vorrichtung zur Großflächenfiltration thermoplastischer Schmelzen für Extruder, mit einem ersten einenFilter (1) aufweisenden Filtergehäuse (7) und einem zweiten einen Filter (2) aufweisenden Filtergehäuse (8), wobei jedes Filtergehäuse (7,8) einen Einlass (7a,8a) und einen Auslass (7b,8b) besitzt und wobei die Einlässe (7a,8a) mit einem Schmelzeventil (16) und die Auslässe (7b,8b) mit einem Schmelzeventil (17) in Wirkverbindung stehen, **dadurch gekennzeichnet, dass** die Filtergehäuse (7,8) unabhängig voneinander um die Schwenkachse (24a bzw. 24b) wenigstens einer ersten Säule (11) bzw. einer zweiten Säule (13) eines die Filtergehäuse (7,8) tragenden Säulengestells (12) schwenkbar angeordnet sind.

2. Vorrichtung nach Anspruch 1, **dadurch gekennzeichnet, dass** die Schwenkbewegung um die Achse (24a, 24b) mindestens 90° beträgt.

3. Vorrichtung nach einem oder mehreren der Ansprüche 1 bis 2, **dadurch gekennzeichnet, dass** die Filtergehäuse (7,8) am Säulengestell (12) durch Spannbügel (10) gehalten werden.

4. Vorrichtung nach einem oder mehreren der Ansprüche 1 bis 3, **dadurch gekennzeichnet, dass** mindestens zwei Paare von Spannbügeln (10) je Filtergehäuse (7, 8) vorgesehen sind.

5. Vorrichtung nach einem oder mehreren der Ansprüche 1 bis 4, **dadurch gekennzeichnet, dass** je ein Paar Spannbügel (10) im Bereich der oberen und unteren Stirnfläche an der Mantelfläche der Filtergehäuse (7, 8) die Filtergehäuse (7, 8) halten.

6. Vorrichtung nach einem oder mehreren der Ansprüche 1 bis 5, **dadurch gekennzeichnet, dass** die Kontaktfläche der Spannbügel (10) mit den Mantelflächen der Filtergehäuse (7, 8) mindestens 180° beträgt.

7. Vorrichtung nach einem oder mehreren der Ansprüche 1 bis 6, **dadurch gekennzeichnet, dass** etwa mittig zwischen jedem Paar von Spannbügeln (10) eine Spannschraube (6) vorgesehen ist, durch welche zwischen dem Filtergehäuse (7, 8) mit seinen und den Dichtflächen eines Zwischenstückes (14) und den Dichtflächen der Schmelzeventile (16, 17) die Wirkverbindung herstellbar ist.

8. Vorrichtung nach einem oder mehreren der Ansprüche 1 bis 7, **dadurch gekennzeichnet, dass** die Spannbügel (10) mit einem Ende über Hülsen (3) mit den Säulen (11, 13) des Säulengestells (12) drehbar verbunden sind.

9. Vorrichtung nach einem oder mehreren der Ansprüche 1 bis 8, **dadurch gekennzeichnet, dass** die Spannbügel (10) mittels Bolzen (15) lösbar an Verbindungsstücken befestigt sind, wobei die Verbindungsstücke wiederum über Hülsen (3) an den Säulen (11, 13) des Säulengestells (12) drehbar gelagert sind.

10. Vorrichtung nach einem oder mehreren der Ansprüche 1 bis 9, **dadurch gekennzeichnet, dass** die Zwischenstücke (14) in den Verbindungsstutzen der Filtergehäuse (7, 8) auswechselbar sind.

11. Vorrichtung nach einem oder mehreren der Ansprüche 1 bis 10, **dadurch gekennzeichnet, dass** die Schmelzeventile (16, 17) jeweils zwischen zwei plattenförmigen Jochen (18a,18b) des Säulengestells (12) eingespannt sind.

12. Vorrichtung nach einem oder mehreren der Ansprüche 1 bis 11, **dadurch gekennzeichnet, dass** die Joche (18a,18b) innerhalb des Säulengestells (12) festliegen und jeweils ein oberes und unteres Jochpaar bilden.

13. Vorrichtung nach einem oder mehreren der Ansprüche 1 bis 12, **dadurch gekennzeichnet, dass** das obere Jochpaar und das untere Jochpaar zur Justierung der Anschlusspunkte in ihrem Abstand zueinander einstellbar sind.

14. Vorrichtung zur Großflächenfiltration thermoplastischer Schmelzen für Extruder, mit einem einen Filter (1) aufweisenden Filtergehäuse (7), wobei das Filtergehäuse (7) einen Einlass (7a) und einen Auslass (7b) besitzt und wobei der Einlaß (7a) mit einem Schmelzeventil (16) und der Auslaß (7b) mit einem Schmelzeventil (17) in Wirkverbindung stehen,
**dadurch gekennzeichnet, daß**
das Filtergehäuse (7) um die Schwenkachse (24a) wenigstens einer Säule (11) eines das Filtergehäuse (7) tragenden Säulengestells (12) schwenkbar angeordnet ist.

## Claims

1. Apparatus for the large-area filtration of thermoplastic melts for extruders, having a first filter housing (7) which has a filter (1) and a second filter housing (8) which has a filter (2), each filter housing (7, 8) having an inlet (7a, 8a) and an outlet (7b, 8b) and the inlets (7a, 8a) being operatively connected to a melt valve (16) and the outlets (7b, 8b) being operatively connected to a melt valve (17), **characterised in that** the filter housings (7, 8) are arranged to pivot independently of each other about the pivot axis (24a or 24b) of at least a first column (11) or a second column (13) of a frame (12) which carries the filter housings (7, 8).

2. Apparatus according to claim 1, **characterised in that** the pivotal movement about the axis (24a, 24b) is at least 90°.

3. Apparatus according to any one or more of claims 1 and 2, **characterised in that** the filter housings (7, 8) are held on the frame (12) by clamping brackets (10).

4. Apparatus according to any one or more of claims 1 to 3, **characterised in that** at least two pairs of clamping brackets (10) are provided per filter housing (7, 8).

5. Apparatus according to any one or more of claims 1 to 4, **characterised in that** a pair of clamping brackets (10) in the region of the upper end face and a pair of clamping brackets (10) in the region of the lower end face hold the filter housings (7, 8) at the outer face of the filter housings (7, 8).

6. Apparatus according to any one or more of claims 1 to 5, **characterised in that** the contact face of the clamping brackets (10) with the outer faces of the filter housings (7, 8) extends at least 180°.

7. Apparatus according to any one or more of claims 1 to 6, **characterised in that** a tightening screw (6) is provided approximately centrally between each pair of clamping brackets (10), by means of which tightening screw (6) the operative connection can be produced between sealing faces of the filter housing (7, 8) and sealing faces of an intermediate piece (14) and sealing faces of the melt valves (16, 17).

8. Apparatus according to any one or more of claims 1 to 7, **characterised in that** the clamping brackets (10) are rotatably connected at one end to the columns (11, 13) of the frame (12) via sleeves (3).

9. Apparatus according to any one or more of claims 1 to 8, **characterised in that** the clamping brackets (10) are releasably fixed to connection pieces by means of pins (15), the connection pieces again being rotatably supported on the columns (11, 13) of the frame (12) by means of sleeves (3).

10. Apparatus according to any one or more of claims 1 to 9, **characterised in that** the intermediate pieces (14) in the connections of the filter housings (7, 8) are exchangeable.

11. Apparatus according to any one or more of claims 1 to 10, **characterised in that** the melt valves (16, 17) are each clamped between two plate-shaped yokes (18a, 18b) of the frame (12).

12. Apparatus according to any one or more of claims 1 to 11, **characterised in that** the yokes (18a, 18b) are fixed within the frame (12) and form an upper pair and a lower pair of yokes.

13. Apparatus according to any one or more of claims 1 to 12, **characterised in that** the upper yoke pair and the lower yoke pair can be adjusted in terms of spacing from each other in order to suit the connection points.

14. Apparatus for the large-area filtration of thermoplastic melts for extruders, having a filter housing (7) which has a filter (1), the filter housing (7) having an inlet (7a) and an outlet (7b), and the inlet (7a) being operatively connected to a melt valve (16) and the outlet (7b) being operatively connected to a melt valve (17), **characterised in that** the filter housing (7) is arranged to pivot about the pivot axis (24a) of at least one column (11) of a frame (12) which carries the filter housing (7).

## Revendications

1. Dispositif de filtration à grande surface des matières thermoplastiques à l'état fondu, destiné à des extrudeuses, comprenant un premier boîtier de filtre (7) contenant un filtre (1) et un deuxième boîtier de filtre (8) contenant un filtre (2), dans lequel chaque boîtier de filtre (7, 8) est muni d'une entrée (7a, 8a) et d'une sortie (7b, 8b) et dans lequel les entrées (7a, 8a) sont en liaison active avec une vanne de distribution de la matière fondue (16) et les sorties (7b, 8b) avec une vanne de distribution de la matière fondue (17), **caractérisé en ce que** les boîtiers de filtre (7, 8) sont disposés de manière pivotante indépendamment l'un de l'autre autour de l'axe de pivotement (24a et 24b) d'au moins une première colonne (11) ou d'une deuxième colonne (13) d'un châssis à colonnes (12) supportant les boîtiers de filtre (7, 8).

2. Dispositif selon la revendication 1, **caractérisé en ce que** le mouvement de pivotement autour de l'axe (24a, 24b) couvre au moins 90°.

3. Dispositif selon une ou plusieurs des revendications 1 à 2, **caractérisé en ce que** les boîtiers de filtre (7, 8) sont maintenus contre le châssis à colonnes (12) par des brides de fixation (10).

4. Dispositif selon une ou plusieurs des revendications 1 à 3, **caractérisé en ce qu'**au moins deux paires de brides de fixation (10) sont prévues pour chaque boîtier de filtre (7, 8).

5. Dispositif selon une ou plusieurs des revendications 1 à 4, **caractérisé en ce que** chacune des paires de brides de fixation (10) maintient les boîtiers de filtre (7, 8) dans la zone de la face frontale supérieure et inférieure de la paroi latérale des boîtiers de filtre (7, 8).

6. Dispositif selon une ou plusieurs des revendications 1 à 5, **caractérisé en ce que** la surface de contact des brides de fixation (10) avec les parois latérales des boîtiers de filtre (7, 8) est au moins égale à 180°.

7. Dispositif selon une ou plusieurs des revendications 1 à 6, **caractérisé en ce qu'**il est prévu, pratiquement au milieu entre chaque paire de brides de fixation (10), une vis de serrage (6), par l'intermédiaire de laquelle il est possible d'établir la liaison active entre le boîtier de filtre (7, 8) avec ses surfaces étanches et les surfaces étanches d'une pièce intermédiaire (14) et les surfaces étanches des vannes de distribution de la matière fondue (16, 17).

8. Dispositif selon une ou plusieurs des revendications 1 à 7, **caractérisé en ce que** les brides de fixation (10) sont assemblées de manière rotative par une extrémité avec les colonnes (11, 13) du châssis à colonnes (12), au moyen de douilles (3).

9. Dispositif selon une ou plusieurs des revendications 1 à 8, **caractérisé en ce que** les brides de fixation (10) sont fixées de manière amovible contre des pièces d'assemblage au moyen de boulons (15), sachant que les pièces d'assemblage, elles-mêmes, sont logées de manière rotative contre les colonnes (11, 13) du châssis à colonnes (12) au moyen de douilles (3).

10. Dispositif selon une ou plusieurs des revendications 1 à 9, **caractérisé en ce que** les pièces intermédiaires (14) sont amovibles dans les tubulures de raccord des boîtiers de filtre (7, 8).

11. Dispositif selon une ou plusieurs des revendications 1 à 10, **caractérisé en ce que** les vannes de distribution de la matière fondue (16, 17) sont bloquées chacune entre deux entretoises (18a, 18b) en forme de plaques du châssis à colonnes (12).

12. Dispositif selon une ou plusieurs des revendications 1 à 11, **caractérisé en ce que** les entretoises (18a, 18b) sont disposées de manière fixe à l'intérieur du châssis à colonnes (12) et forment respectivement une paire d'entretoises supérieure et inférieure.

13. Dispositif selon une ou plusieurs des revendications 1 à 12, **caractérisé en ce que** la paire d'entretoises supérieure et la paire d'entretoises inférieure peuvent être réglées l'une par rapport à l'autre en vue d'ajuster en distance les points d'assemblage.

14. Dispositif de filtration à grande surface des matières thermoplastiques à l'état fondu, destiné à des extrudeuses, comprenant un boîtier de filtre (7) contenant un filtre (1), dans lequel le boîtier de filtre (7) est muni d'une entrée (7a) et d'une sortie (7b) et dans lequel l'entrée (7a) est en liaison active avec une vanne de distribution de la matière fondue (16) et la sortie (7b) avec une vanne de distribution de la matière fondue (17), **caractérisé en ce que** le boîtier de filtre (7) est disposé de manière pivotante autour de l'axe de pivotement (24a) d'au moins une colonne (11) d'un châssis à colonnes (12) supportant le boîtier de filtre (7).
